# EUROPÄISCHE PATENTANMELDUNG

(11) **EP 2 799 169 A2**
(43) Veröffentlichungstag der Anmeldung: **05.11.2014**
(21) Anmeldenummer: 14165577.9
(22) Anmeldetag: 23.04.2014
(51) Int. Cl.: B23B 29/034, B23B 31/26

(54) **Verfahren und Vorrichtung zum Einstellen auf eine Motorspindel einer Werkzeugmaschine aufgespannter einstellbarer Werkzeuge**

(30) Priorität: 02.05.2013 DE 102013208027
(71) Anmelder: ARTIS GmbH, 29646 Bispingen-Behringen (DE)
(72) Erfinder: Hofmann, Albert, 68789 St. Leon-Rot (DE)
(74) Vertreter: Wegner, Hans

(57) **Zusammenfassung**

Die Erfindung betrifft eine Motorspindel (210) für eine Werkzeugmaschine, die aufweist: (a) ein Werkzeugspannsystem (250), das ausgebildet ist, ein einstellbares Werkzeug (230) automatisch zu spannen und zu entspannen; (b) eine innerhalb des Werkzeugspannsystems angeordnete Steuerstange (270); und (c) eine an einer B-Seite der Motorspindel (210) angeordnete Einstelleinheit (220), die ausgebildet ist das einstellbare Werkzeug (230) mittels der Steuerstange (270) einzustellen.

## Beschreibung

### 1. Technisches Gebiet

Die vorliegende Erfindung betrifft eine Vorrichtung und ein Verfahren zum Einstellen auf eine Motorspindel einer Werkzeugmaschine aufgespannter einstellbarer Werkzeuge.

### 2. Stand der Technik

Heutzutage werden hohe Anforderungen an die Wirtschaftlichkeit und Produktivität von Fertigungsanlagen gestellt. Werkzeugmaschinen bilden Schlüsselelemente in vielen Produktionsanlagen. Moderne Werkzeugmaschinen weisen häufig Motorspindeln auf. Eine Motorspindel ist eine direkt von einem Elektromotor angetriebene Welle mit einer integrierten Werkzeugschnittstelle.

Um die Herausforderungen hinsichtlich Produktivität in einer automatisierten flexiblen Fertigung zu erfüllen, werden bereits seit längerer Zeit automatische Werkzeugspannsysteme eingesetzt. Beispiele automatischer Spannsysteme sind in der europäischen Patentschrift EP 0 339 321 B1 und in der Offenlegungsschrift DE 10 2005 008 892 A1 beschrieben. Die Patentschrift DE 10 2010 009 664 B4 offenbart eine Signalverarbeitungseinheit mit deren Hilfe eine Motorspindel überwacht werden kann und mit der insbesondere ein Maß für eine Abweichung der Motorspindel und/oder deren Lagerung von einem Sollzustand ermittelt werden kann.

Für immer mehr Bearbeitungsschritte muss das Werkzeug gekühlt und/oder geschmiert werden, um die Qualität (Maßhaltigkeit, Oberflächengüte, Standzeit, usw.) des Bearbeitungsprozesses sicherstellen zu können. Dies wird am besten dadurch erreicht, dass die entsprechenden Werkzeuge feine Bohrungen aufweisen, durch die das Kühl- und/oder Schmiermittel direkt am Einsatzort bereitgestellt wird. Das Werkzeug sowie die Werkzeugschneiden werden in der Regel gleichzeitig durch das Kühlmittel von Spänen gereinigt. Überdies weisen automatische Spannsysteme eine separate Zuführung von Reinigungsluft auf, um die Spindel-seitige Werkzeugaufnahme beim Werkzeugwechsel sauber zu halten.

Für Feinbearbeitungsprozesse und/oder spezielle Bearbeitungsprozesse, wie etwa Hinterstiche, müssen einstellbare oder aktorische Werkzeuge eingesetzt werden. Bei einstellbaren Werkzeugen können die Werkzeugschneiden in definierter Weise aus- und eingefahren werden. Bei derzeit verfügbaren einstellbaren Werkzeugen für Feinbearbeitungsprozesse wird oft die aktorische Verstellung direkt in das Werkzeug eingebaut. Die Patentschrift EP 1 169 154 B1 offenbart ein Beispiel eines in einem Feinstbearbeitungswerkzeug angeordneten piezoelektrischen Verstellelements zum Verstellen eines Schneidelements. Die Patentschrift DE 199 25 193 B4 beschreibt einen Haltemechanismus zum Halten eines piezoelektrischen Verstellelements in einem bestimmten Deformationszustand des Werkzeugs, so dass es möglich wird, den Betrieb des Werkzeugs ohne externe Spannungsversorgung einzuhalten.

Da für die verschiedenen Feinbearbeitungsprozesse eine Vielzahl verschiedener Werkzeuge bereit gehalten muss, ist der Einbau eines aktorischen Verstellelements in jedes Werkzeug mit enormen Kosten verbunden. Ferner führt dies zu einer großen Baugröße und einem hohen Gewicht einstellbarer Werkzeuge. Zudem ist die Bereitstellung der elektrischen Energie für das im Werkzeug rotierende aktorische Verstellelement anfällig gegen Schmutz und Feuchtigkeit und deshalb nur aufwändig ausführbar; trotzdem bleibt die Energieversorgung im Werkzeug rotierender Verstellelemente Verschleiß- und Fehler-anfällig.

Die Patentschrift EP 0 491 724 B1 offenbart einen Werkzeugkopf für den Einsatz in Werkzeugmaschinen. Der Werkzeugkopf umfasst einen senkrecht zur Drehachse verschiebbaren Schieber in den verschiedene Schneidwerkzeuge eingesetzt werden können. Die Offenlegungsschrift DE 10 2011 080 701 A1 beschreibt einen Klemmmechanismus für den Schieber, der diesen an einem unbeabsichtigtes Verschieben beim Betrieb des Werkzeugkopfs an einer schnell drehenden Motorspindel hindert. Die Broschüre KOMET KomTronic^{®} U-Achssysteme, die über die Homepage der Firma Komet heruntergeladen werden kann, beschreibt ein modulares System aus einen elektrischen Antrieb mit einer Maschinenschnittstelle auf den ggf. mit Hilfe von Adaptern Aufsatzwerkzeuge aufgespannt werden können.

Die Broschüre MAPAL TOOLTRONIC^{®}, die über die Homepage der Firma Mapal heruntergeladen werden kann, stellt ein modulares System verschiedener aktorischer Werkzeuge zum Bearbeiten von beliebigen Hinterstichen und nichtzylindrischen Bohrungen vor. Das modulare System weist ebenfalls einen eigenen elektrischen Antrieb auf, der wiederum eine Maschinenschnittstelle zum Spannen auf eine Motorspindel und eine Werkzeug-seitige modulare Schnittstelle aufweist. Auf die modulare Schnittstelle können verschiedene Aussteuerwerkzeuge aufgespannt werden, an die dann wiederum unterschiedliche Aufsatzwerkzeuge angeflanscht werden.

Beide modularen Ansätze vermeiden, dass in jedes einstellbare Werkzeug eine eigene Antriebseinheit eingebaut werden muss. Allerdings können auf die Antriebseinheit bzw. den Werkzeugkopf nur ganz spezielle Werkzeuge aufgespannt bzw. angeflanscht werden. Überdies müssen die Werkzeuge manuell auf das Aussteuerwerkzeug bzw. den Schieber aufgesetzt werden.

Die europäische Patentschrift EP 0 430 984 B1 beschreibt eine Feinbohrmaschine mit einem einstellbares Werkzeug, dessen radiale Auslenkung ein in der Arbeitsspindel der Feinbohrmaschine angeordneter piezoelektrischer Stellmotor bewirkt, der mechanisch eine Zugstange verschiebt. Das Werkzeug kann manuell gewechselt werden.

Damit vermeidet das in der EP 0 430 984 B1 offenbarte Prinzip - ähnlich wie die weiter oben angesprochenen modularen Ansätze - den Einbau einer aktorischen Verstelleinheit in jedes einstellbare Werkzeug. Die Spannungsversorgung für den in der Arbeitsspindel rotierenden Stellmotor weist jedoch weiterhin die bereits oben angesprochenen Nachteile auf. Darüber hinaus muss jedes Werkzeug manuell auf die Arbeitsspindel der Feinbohrmaschine aufgespannt werden.

Der vorliegenden Erfindung liegt daher das Problem zugrunde, eine Vorrichtung, ein Verfahren und extern ansteuerbare, einstellbare Werkzeuge bereitzustellen, die automatisch auf eine Motorspindel einer Werkzeugmaschine aufgespannt werden können.

### 3. Zusammenfassung der Erfindung

Dieses Problem wird gemäß einem ersten Aspekt der Erfindung durch eine Vorrichtung nach Anspruch 1 gelöst. In einer Ausführungsform weist eine Motorspindel für eine Werkzeugmaschine auf: (a) ein Werkzeugspannsystem, das ausgebildet ist, ein einstellbares Werkzeug automatisch zu spannen und zu entspannen; (b) eine innerhalb des Werkzeugspannsystems angeordnete Steuerstange; und (c) eine an einer B-Seite der Motorspindel angeordnete Einstelleinheit, die ausgebildet ist das einstellbare Werkzeug mittels der Steuerstange einzustellen.

Eine erfindungsgemäße Vorrichtung ermöglicht es, einstellbare Werkzeuge mit Hilfe eines automatischen Werkzeugspannsystems zu spannen und dabei die für eine Serienfertigung geforderte Wiederholgenauigkeit einzuhalten. Eine Steuerstange einer erfindungsgemäßen Vorrichtung benötigt durch ihren Einbau in ein automatisches Werkzeugspannsystem keinen Platz auf der A-Seite einer Maschinenspindel. Die an der B-Seite der Motorspindel angeflanschte Einstelleinheit reicht in radialer Richtung nicht über die Abmessungen der Motorspindel hinaus. Damit eröffnet die Kombination aus Steuerstange und Einstelleinheit die Möglichkeit einstellbare Werkzeuge automatisch einzustellen ohne den kompakten Aufbau einer Motorspindel wesentlich zu beeinträchtigen. Die kleine Baugröße der an der B-Seite der Maschinenspindel angeflanschten Einstelleinheit ermöglicht somit das Realisieren von sehr engen Stichmaßen in Werkzeugmaschinen, die mehrere Spindeln aufweisen. Die oben beschriebene Steuerstange und Einstelleinheit können einfach in die Designs bestehender Motorspindeln integriert werden.

Die Werkzeugschneiden einstellbarer Werkzeuge können mittels einer im Anspruch 1 definierten Motorspindel mit einer Genauigkeit im Mikrometerbereich eingestellt werden. Der Schneidenverschleiß und/oder erwärmungsbedingte Längenausdehnungen können in einer geschlossenen Regelschleife kompensiert werden. Gleichzeitig können die Werkzeugschneiden bei Bedarf geschmiert und/oder gekühlt werden. Damit erlaubt eine erfindungsgemäße Vorrichtung das Ausführen von Konturbearbeitungsprozessen wie etwa das Bearbeiten von Kegeln und das Herstellen von Trompetenformen, um nur zwei Beispiele zu nennen.

Generell hängt die Qualität eines Bearbeitungsprozesses in erster Linie von der Güte des Werkzeugs, d.h. von dessen Toleranzen, den Schnittparametem des Werkzeugs und der Genauigkeit der Bohrspindel ab. Die Ausführung einer Bohrspindel in Form einer Motorspindel erfüllt aufgrund ihrer Lagerung und ihres direkten Antriebs höchste Genauigkeitsanforderungen hinsichtlich der Position und der Winkellage der Spindelwelle. Auf dieser Grundlage ermöglicht eine erfindungsgemäße Vorrichtung einstellbare Werkzeuge automatisch zu spannen und sehr präzise einzustellen. Damit ist diese für den Einsatz in einer automatischen flexiblen Fertigung prädestiniert.

Nach einem weiteren Aspekt weist die Steuerstange eine Bohrung in axialer Richtung auf, um zumindest ein Fluid durch die Steuerstange zu leiten. Gemäß einem weiteren Aspekt umfasst das zumindest eine Fluid ein Kühlmittel, ein Gas oder eine Gasmischung, insbesondere Luft und/oder ein Öl.

Durch das Durchleiten eines Fluids durch eine Bohrung der Steuerstange kann die bereits oben angesprochene Schmierung und/oder Kühlung eines einstellbaren Werkzeugs realisiert werden. Das zur Kühlung und/oder Schmierung eingesetzte Fluid entfernt zudem Späne vom Bearbeitungsort. Alternativ kann durch die Bohrung der Steuerstange mit Hilfe von Druckluft der Bearbeitungsort d.h. das Werkzeug gereinigt werden.

In einem anderen Aspekt umfasst die Einstelleinheit zumindest einen Elektromotor und zumindest ein Schraubgetriebe. Gemäß einem weiteren Aspekt umfasst das zumindest eine Schraubgetriebe ein Umlaufrädergetriebe. Nach einem günstigen Aspekt umfasst der zumindest eine Elektromotor zumindest einen Servomotor und die Einstelleinheit umfasst ferner eine Kupplung, um das zumindest eine Schraubgetriebe an den Servomotor zu koppeln. In einem bevorzugten Aspekt bewegt der zumindest eine Elektromotor mittels des zumindest einen Schraubgetriebes die Steuerstange in axialer Richtung, um das einstellbare Werkzeug einzustellen.

Nach einem weiteren Aspekt steuert die Einstelleinheit die Steuerstange nach elektronischer Abfrage der axialen Position der Steuerstange das Werkzeug-seitige Ende der Steuerstange mit einer mittleren Abweichung von ≤ ± 100 µm, bevorzugt ≤ ± 50 µm, bevorzugter ≤ ± 20 µm und am meisten bevorzugt ≤ ± 10 µm von einer vorgegebenen Sollposition an.

Die oben angesprochene Einstellgenauigkeit der Werkzeugschneiden im Mikrometerbereich wird durch eine im Wesentlichen spielfreie Umsetzung der Rotationsbewegung der Welle des Servomotors in eine Translationsbewegung der Steuerstange durch ein Umlaufrädergetriebe erreicht. Falls eine Kupplung zwischen dem Servomotor und dem Schraubgetriebe vorhanden ist, weist diese ebenfalls eine im Wesentlichen spielfreie Ausführungsform auf. Dabei bedeutet der Ausdruck "im Wesentlichen" hier wie auch an anderen Stellen dieser Beschreibung eine Abweichung von einem Sollwert, die innerhalb vorgegebener Toleranzgrenzen ist.

Mit Hilfe einer geschlossenen Regelschleife kann die axiale Position des Werkzeug-seitigen Endes der Steuerstange abgefragt werden und damit die Schneiden des Werkzeugs mit einer Präzision im Mikrometerbereich eingestellt werden.

Nach noch einem anderen Aspekt umfasst die Einstelleinheit eine Kühlmitteleinheit. Gemäß einem weiteren Aspekt umfasst die Kühlmitteleinheit eine Drehdurchführung. In einem vorteilhaften Aspekt stellt die Kühlmitteleinheit mittels des zumindest einen durch die Steuerstange geleiteten Fluids das einstellbare Werkzeug ein.

Ein ganz wesentlicher Vorteil der definierten Vorrichtung liegt darin, dass diese sowohl mechanisch einstellbare Werkzeuge als auch Fluidoder Medien-gesteuerte Werkzeuge einstellen kann. Die definierte Vorrichtung ist somit für den Einsatz in einer automatisierten flexiblen Fertigung bestens geeignet, da sie die weitere Nutzung bereits vorhandener einstellbarer Werkzeuge ermöglicht. Selbstverständlich können auch starr ausgeführte Werkzeuge, d.h. Werkzeuge deren Werkzeugschneiden nicht eingestellt werden können, auf die oben definierte Motorspindel aufgespannt werden.

Nach einem weiteren günstigen Aspekt kühlt und/oder schmiert das zumindest eine Fluid das einstellbare Werkzeug. Gemäß einem anderen bevorzugten Aspekt stellt eine axiale Bewegung der Steuerstange das einstellbare Werkzeug ein und kühlt und/oder schmiert das zumindest eine Fluid das einstellbare Werkzeug.

Die definierte Motorspindel bietet die Möglichkeit durch zwei verschiedene Parameter und damit unabhängig voneinander die Werkzeugschneiden eines einstellbaren Werkzeugs präzise einzustellen und ein dafür ausgelegtes Werkzeug mit einer vorgegebenen Menge eines Fluids definiert zu kühlen und/oder zu schmieren.

In einem weiteren Aspekt weist ein Verfahren zum Einstellen eines einstellbaren Werkszeugs, das lösbar mit einer Motorspindel einer Werkzeugmaschine verbunden ist, ein in der Motorspindel angeordnetes automatisches Werkzeugspannsystem auf und das Werkzeugspannsystem umfasst eine innerhalb des automatischen Werkzeugspannsystems angeordnete Steuerstange. Das Verfahren weist die Schritte auf: (a) Spannen und Entspannen des einstellbaren Werkzeugs durch das automatische Werkzeugspannsystem; und (b) Einstellen des einstellbaren Werkzeugs durch eine an einer B-Seite der Motorspindel angeordnete Einstelleinheit mittels der Steuerstange.

Das erfindungsgemäße Verfahren macht es ermöglich, einstellbare Werkzeuge automatisch zu spannen und von der B-Seite der Motorspindel aus automatisch auszusteuern. Die Bauform der Werkzeuge wird damit nicht eingeschränkt.

Gemäß einem anderen Aspekt umfasst das Einstellen des einstellbaren Werkzeugs das Bewegen der Steuerstange in axialer Richtung. In einem weiteren günstigen Aspekte umfasst das Bewegen der Steuerstange in axialer Richtung das Umsetzen einer Rotationsbewegung einer Welle eines Elektromotors in eine Translationsbewegung der Steuerstange durch ein Schraubgetriebe, insbesondere ein Umlaufrädergetriebe.

In einem anderen bevorzugten Aspekt umfasst das Einstellen des einstellbaren Werkzeugs das Leiten eines Fluids durch eine in axialer Richtung der Steuerstange vorhandene Bohrung. Nach noch einem anderen Aspekt umfasst das Einstellen des einstellbaren Werkzeugs das Bewegen der Steuerstange in axialer Richtung und das Kühlen und/oder Schmieren des einstellbaren Werkzeugs durch das Leiten eines Fluids durch eine in axialer Richtung der Steuerstange vorhandene Bohrung.

Das Problem der vorliegenden Erfindung wird gemäß einem zweiten Aspekt durch eine Vorrichtung nach Anspruch 19 gelöst. In einer Ausführungsform weist ein einstellbares Werkzeug (a) ein Aufnahmeteil auf, das ausgebildet ist mit einem automatischen Werkzeugspannsystem in lösbaren Eingriff zu gelangen; und (b) ein Kraftübertragungsteil auf, das ausgebildet ist mit einer im automatischen Werkzeugspannsystem angeordneten Steuerstange in lösbaren Eingriff zu gelangen, um das einstellbare Werkzeug einzustellen.

Einstellbare Werkzeuge, die ein Kraftübertragungsteil aufweisen und somit mechanisch über eine Translationsbewegung einer Steuerstange der oben definierten Vorrichtung angesteuert werden können, ermöglichen den Aufbau eines modularen Systems einstellbarer Werkzeuge für eine automatisierte flexible Fertigung.

In noch einem anderen bevorzugten Aspekt ist das Kraftübertragungsteil ferner ausgebildet ein Fluid aufzunehmen, das mittels einer axialen Bohrung der Steuerstange dem Werkzeug bereitgestellt wird.

Ein derart ausgelegtes Werkzeug erlaubt es durch zwei verschiedene Parameter d.h. unabhängig voneinander die Werkzeugschneiden einstellbarer Werkzeuge einzustellen und die zuführte Menge eines Kühl- und/oder Schmiermittels an den Bearbeitungsort festzulegen.

Schließlich umfasst in einem anderen günstigen Aspekt ein einstellbares Werkzeug zumindest eine Feder, die ausgebildet ist einer auf das Kraftübertragungsteil ausgeübten Kraft entgegenzuwirken.

In einem einstellbaren Werkzeug aus dem Stand der Technik ist die Steuerstange fest mit dem Werkzeug verbunden und kann eine in axialer Richtung wirkende Kraft erzeugen, die in Richtung des Werkzeugs gerichtet ist (Drücken) oder die in Richtung der B-Seite gerichtet ist (Ziehen). Bei einem wechselbaren, d.h. insbesondere bei einem automatisch spannbaren Werkzeug kann eine Steuerstange nur auf das Kraftübertragungsteil des einstellbaren Werkzeugs drücken, jedoch keine Zugkraft auf das Kraftübertragungsteil ausüben. Eine in dem Werkzeug eingebaute Feder liefert eine der Kraft der Steuerstange entgegengesetzt gerichtete Kraft und ermöglicht dadurch ein definiertes Einstellen der Werkzeugschneiden des Werkzeugs.

### 4. Kurze Beschreibung der Zeichnungen

In der nachfolgenden detaillierten Beschreibung werden derzeit bevorzugte Ausführungsbeispiele der vorliegenden Erfindung unter Bezugnahme auf die begleitenden Figuren erläutert, wobei
- Fig. 1: eine schematische Darstellung einer Motorspindel mit integriertem automatischem Werkzeugspannsystem, das ein einstellbares Werkzeug spannt und eine Einstelleinheit zum Einstellen oder Verstellen des einstellbaren Werkzeugs veranschaulicht;
- Fig. 2: ein Beispiel einer Motorspindel zum automatischen Spannen und Einstellen einstellbarer Werkzeuge wiedergibt;
- Fig. 3: vergrößert die B-Seite der Motorspindel des Beispiels der Fig. 2 darstellt;
- Fig. 4: vergrößert die A-Seite oder die Werkzeugseite der Motorspindel der Fig. 2 mit einem starren, d.h. nicht einstellbaren Werkzeug zeigt;
- Fig. 5: vergrößert die Werkzeugseite der Motorspindel der Fig. 2 mit einem ersten einstellbaren Werkzeug darstellt;
- Fig. 6: vergrößert die Werkzeugseite der Motorspindel der Fig. 2 mit einem zweiten einstellbaren Werkzeug zeigt; und
- Fig. 7: vergrößert die A-Seite der Motorspindel der Fig. 2 mit einem dritten einstellbaren Werkzeug repräsentiert.

### 5. Detaillierte Beschreibung bevorzugter Ausführungsbeispiele

Im Folgenden werden gegenwärtig bevorzugte Ausführungsbeispiele der erfindungsgemäßen Vorrichtung und des erfindungsgemäßen Verfahrens zum automatischen Spannen eines einstellbaren Werkzeugs auf eine Motorspindel einer Werkzeugmaschine erläutert. Diese beispielhaften Erläuterungen werden im Kontext einer Motorspindel für eine Werkzeugmaschine beschrieben. Motorspindeln sind aufgrund ihrer Lager und ihres direkten Antriebs besonders gut für Feinbearbeitungsprozesse geeignet. Eine hier beschriebene Vorrichtung kann jedoch auch in die Spindeln anderer Werkzeugmaschinentypen eingesetzt werden.

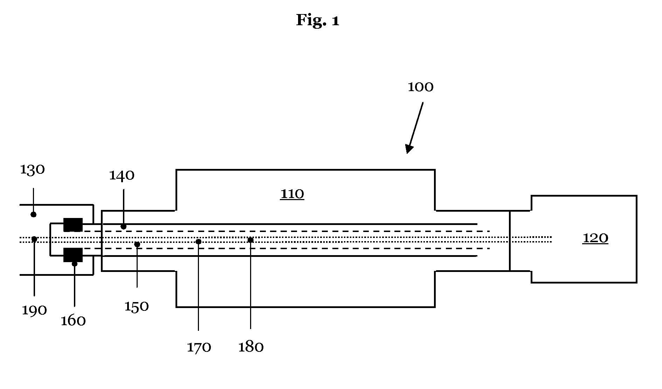

Die Fig. 1 zeigt schematisch eine Übersicht einer erfindungsgemäßen Vorrichtung 100. Diese umfasst eine Motorspindel 110. Die A-Seite bezeichnet die Seite der Motorspindel 110, die ein Werkzeug trägt. Die B-Seite beschreibt das entgegengesetzte Ende der Motorspindel 110. An der B-Seite der Motorspindel 110 ist eine Einstelleinheit 120 angeflanscht. In der Motorspindel 110 ist eine Spindelwelle 140 angeordnet. Auf der A-Seite der Motorspindel 110 ist ein Werkzeug 130 auf die Spindelwelle 140 der Motorspindel 110 aufgespannt. Die Spindelwelle 140 reicht von der B-seitigen Lagerung bis zur A-seitigen Werkzeugschnittstelle. Verbreitete Typen von Werkzeugschnittstellen sind beispielsweise HSK (Hohlspannkegel) oder SK (Steilkegel). Die erfinderische Vorrichtung kann für beide Werkzeugschnittstellen eingesetzt werden, sowie für weitere Werkzeugschnittstellen, deren Werkzeugspannsystem einen zentralen axialen Durchgang ermöglichen.

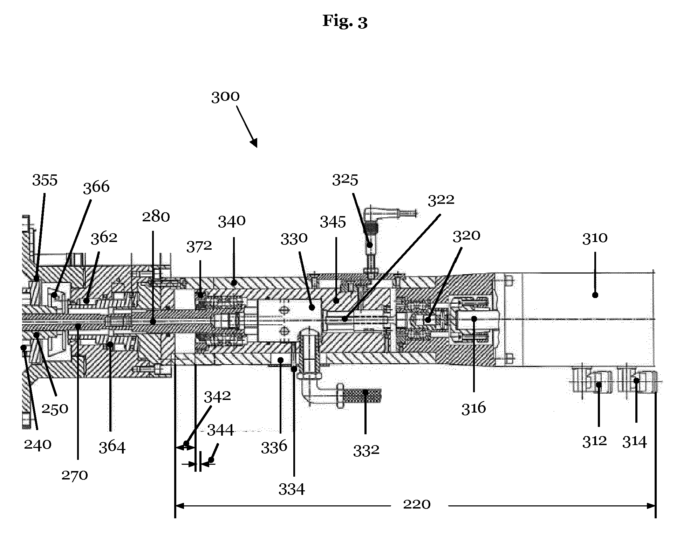

Die Spindelwelle 140 enthält ein automatisches Werkzeugspannsystem 150 oder einen automatischen Werkzeugspanner 150. Der Werkzeugspanner 150 umfasst auf der A-Seite Spannzangen 160 mit deren Hilfe das Werkzeug 130 automatisch auf die Spindelwelle 140 der Motorspindel 110 aufgespannt und wieder gelöst werden kann. Auf der B-Seite reicht der Werkzeugspanner 150 über die Spindelwelle 140 hinaus, um am überstehenden Teil eine Spann- und Lösevorrichtung anzubringen. Details werden im Kontext der Fig. 3 unten diskutiert.

Im Markt sind derzeit automatische Werkzeugspannspannsysteme 150 verfügbar, die unterschiedliche Prinzipien zum Spannen und Entspannen von Werkzeugen 130 einsetzen. Der Spann- und Lösevorgang ist unabhängig davon, ob ein Werkzeug 130 einstellbar ist oder nicht. Die hier beschriebene Vorrichtung 100 ist unabhängig von der Art des Spannsystems 150. Diese ist vielmehr für alle bereits vorhandenen und zukünftigen automatischen Werkzeugspannsysteme 150 einsetzbar, die eine zentrale axiale Öffnung aufweisen.

In dem Werkzeugspanner 150 ist eine Steuerstange 170 angeordnet. Die Steuerstange 170 reicht von der Werkzeugschnittstelle der Spindelwelle 140 bis in die Einstelleinheit 120. Die Steuerstange 170 weist eine axiale Bohrung 180 auf, die ebenfalls von der Einstelleinheit 120 bis zur Werkzeugschnittstelle auf der A-Seite der Motorspindel 110 reicht. Über die Bohrung 180 der Steuerstange 170 kann der Kanal 190 des Werkzeugs 130 mit einem Kühl- und/oder Schmiermittel versorgt werden.

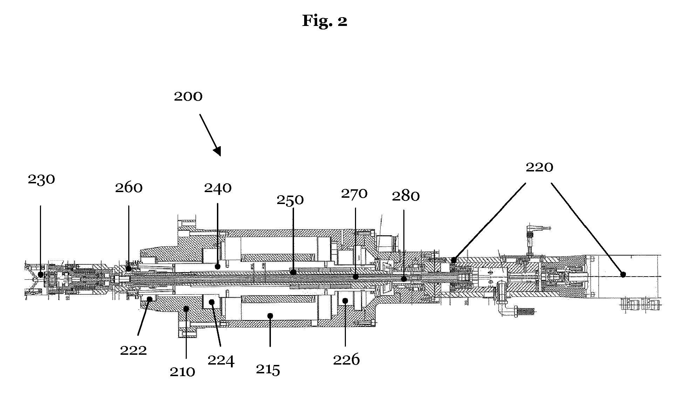

Die Fig. 2 zeigt im Überblick ein Ausführungsbeispiel 200 einer Vorrichtung zum automatischen Spannen und Einstellen einstellbarer Werkzeuge. Die Motorspindel 210 weist eine Spindelwelle 240 auf. Diese wird auf der A-Seite durch die Lager 222 und 224 und auf der B-Seite durch das Lager 226 in ihrer Position gehalten. Der Stator 215 treibt die Spindelwelle 240 an. Die Spindelwelle 240 enthält ein automatisches Werkzeugspannsystem 250, das an der B-Seite Spannzangen 260 aufweist. In dem Werkzeugspanner 250 befindet sich eine Steuerstange 270, die eine durchgehende axiale Bohrung 280 aufweist. Auf der A-Seite ist ein Werkzeug 230 auf die Spindelwelle 240 der Motorspindel 210 aufgespannt. Auf der B-Seite der Motorspindel 210 ist die Einstelleinheit 220 angeflanscht.

Die Fig. 3 zeigt einen vergrößerten Ausschnitt der B-Seite der Motorspindel 210 mit angeflanschter Einstelleinheit 220. Die Einstelleinheit 220 umfasst an ihrem rechten Ende einen Servomotor 310, der durch die Anschlüsse 312 und 314 mit elektrischer Energie versorgt wird und eine Gehäuse-Einstelleinheit 340. Die Welle 316 des Servomotors 310 ist mit einer Umlaufrädergewindespindel oder Planetengewindespindel 320 verbunden. Die Planetengewindespindel 320 ist mit der Mutter 322 verbunden. Die Mutter 322 der Planetengewindespindel 320 sitzt in einem axial beweglichen Kolben 345 der Gehäuse-Einstelleinheit 340. Im beweglichen Kolben 345 ist ferner die Drehdurchführung 330 angeordnet. Das Axialstellgetriebe, das im Beispiel der Fig. 3 die Planetengewindespindel 320 und der Mutter 322 umfasst, setzt die Rotationsbewegung der Welle 316 des Servomotors in eine Translationsbewegung der Steuerstange 270 um. Der maximale Hub 342 der Steuerstange 270 beträgt in dem in den Figuren 2 und 3 dargestellten Beispiel 26 mm. Dabei entspricht eine Umdrehung der Welle 316 einer axialen Translationsbewegung der Steuerstange 270 von 2 mm. Zur Verschleißkompensation ist eine Reserve 344 von 5 mm vorgesehen, die in dem maximalen Hub von 26 mm enthalten ist.

Der Näherungsschalter 325 dient als Referenzpunktgeber für den Absolut-Wertgeber des Servomotors 310, der bei einem Start der Werkzeugmaschine jeweils abgefragt wird. Die Ist-Position der Steuerstange 270 wird anhand der Daten des Absolut-Wertgebers des Servomotors 310 errechnet.

Am linken Ende der Fig. 3 ist das Ende 355 der Spindelwelle 240 dargestellt. In der Spindelwelle 240 befindet sich der Werkzeugspanner 250. Die Hydraulikeinheit 364, die mit dem automatischen Werkzeugspanner 250 verbunden ist, dient mittels des Hydraulikkolbens 362 zum automatischen Spannen und Lösen des Werkzeugs 130, 230 durch Verschieben des Werkzeugspanners 250 in axialer Richtung.

Wie bereits oben angesprochen, weist die Steuerstange 270 eine durchgehende axiale Bohrung 280 auf. Die Bohrung 280 steht mit der Drehdurchführung 330 in Verbindung. Der Übergang von der Drehdurchführung 330 zur Steuerstange 270 wird durch einen Dichtring abgedichtet. Durch den Anschluss 332 kann der Drehdurchführung 330 ein Fluid zugeführt werden. In dieser Beschreibung umfasst der Ausdruck Fluid Kühlmittel/Schmiermittel, Öl und Gase oder Gasmischungen zum Einstellen Fluid-gesteuerter Werkzeuge sowie generell zum Kühlen, Schmieren und Reinigen der Werkzeuge 130, 230 bzw. der Werkzeugschneiden der Werkzeuge 130, 230. Normalerweise wird derzeit Luft als Kühlmittel und zum Reinigen von Werkzeugen 130, 230 eingesetzt.

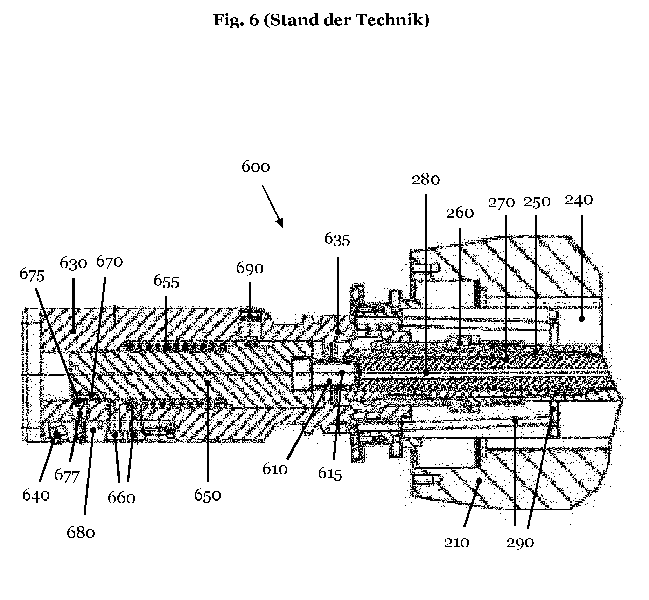

Somit kann über die Bohrung 280 der Steuerstange 270 das Werkzeug in kontrollierter Weise mit entsprechenden Kühl- und/oder Schmierstoffen versorgt werden. Unabhängig von einer axialen Translationsbewegung können über den Anschluss 332 Fluid-gesteuerte einstellbare Werkzeuge 130, 230 durch Einstellen eines entsprechenden Druckes am Anschluss 332 der Drehdurchführung 330 kontrolliert eingestellt bzw. verstellt werden. Details hierzu werden im Kontext der Diskussion der Fig. 6 erläutert. Der Ausdruck Fluid-gesteuerte Werkzeuge bedeutet in dieser Beschreibung das Einstellen oder Verstellen der Werkschneiden einstellbarer Werkzeuge durch Zufuhr einer definierten Menge eines Fluids pro Zeiteinheit in das Werkzeug.

Die Gummidichtung 336 der Gehäuse-Einstelleinheit 340 deckt den Zugang zum beweglichen Kolben 345 ab und verhindert das Eindringen von Schutz auf den beweglichen Kolben 345 der Gehäuse-Einstelleinheit 340. Anhand des Leckagenanschlusses 334 kann die Dichtigkeit der Drehdurchführung 330 geprüft werden. Anstelle von Kühl- bzw. Schmiermittel kann das Werkzeug 130, 230 über den Anschluss 332 der Drehdurchführung 330 alternativ auch mit Druck- oder Reinigungsluft zum Säubern des Bearbeitungsortes versorgt werden.

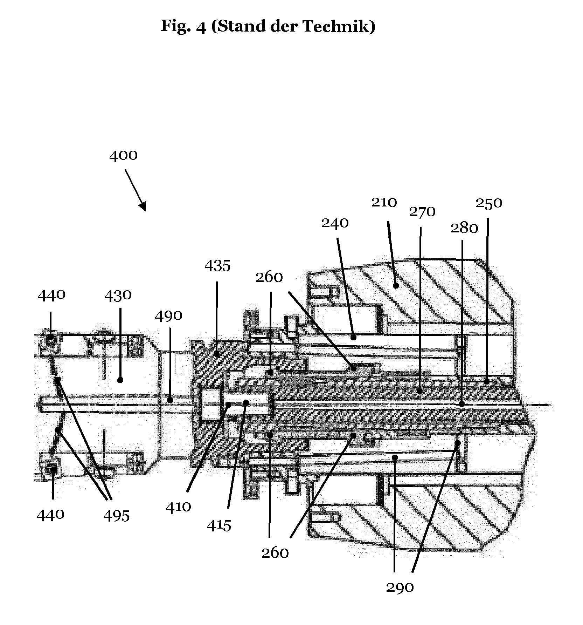

Die Anordnung 400 der Fig. 4 zeigt die A-Seite der Motorspindel 210 der Fig. 2. Die Spindelwelle 240 der Motorspindel 210 trägt ein Werkzeug 430 aus dem Stand der Technik. Die Spannzangen 260 des in der Spindelwelle 240 angeordneten Werkzeugspanners 250 spannen das Werkzeug 430 auf die Spindelwelle 240 der Motorspindel 210.

Die Spindelwelle 240 weist Bohrungen oder Öffnungen 290 auf. Die Öff-nungen 290 enden an dem inneren Kegel und an der Stirnseite der Werkzeugaufnahme der Spindelwelle 240. Die Steuerstange 270 fährt nach dem Lösen der Spannzangen 260 in Richtung des Werkzeugs 430 weiter und drückt das Werkzeug 430 mechanisch von der Spindelwelle 240 ab.

Die Steuerstange 270 endet in einem Anschlussteil oder Kraftübertragungsteil 410, das in dem Schaft oder Aufnahmeteil 435 des Werkzeugs 430 angeordnet ist. Das Anschlussstück 410 weist einen Kanal 415 auf, der in Verbindung zu dem im Werkzeug 430 vorhandenen Kanal 490 steht. Über die Öffnungen 495, die mit dem Kanal 490 in Verbindung stehen, werden die Schneiden 440 des Werkzeugs 430 mit Kühl- und/oder Schmiermittel versorgt. Das Werkzeug 430 stellt ein Beispiel eines starren Werkzeugs dar, d.h. seine Werkzeugschneiden 440 können nicht oder zumindest nicht automatisch eingestellt werden. Mit Hilfe eines Dichtrings wird der Übergang von der Steuerstange 270 zum Kraftübertragungsteil 410 des Werkzeugs 430 abgedichtet (in der Fig. 4 nicht dargestellt).

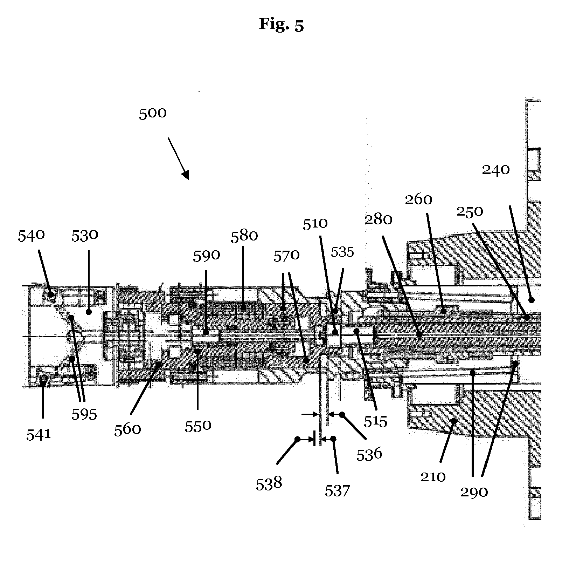

Die Konfiguration 500 der Fig. 5 repräsentiert erneut die A-Seite der Motorspindel 210 der Fig. 2. Auf die Spindelwelle 240 der Motorspindel 210 ist im Beispiel der Fig. 5 ein einstellbares oder während eines Bearbeitungsprozesses steuerbares Werkzeug 530 aufgespannt. In dem Beispiel der Fig. 5 ist das einstellbare Werkzeug ein Bohrwerkzeug. Das Anschlussteil oder Kraftübertragungsteil 510 des Werkzeugs 530 steht wiederum mit der Steuerstange 270 in Verbindung. Ähnlich wie im Zusammenhang mit der Fig. 4 erläutert, können über den Anschluss 332 der Drehdurchführung 330, die Bohrung 280 der Steuerstange 270, dem Kanal 515 des Kraftübertragungsteils 510 und die Kanäle oder Öffnungen 590 und 595 die Werkzeugschneiden 540 des Werkzeugs 530 in dosierbarer Weise mit Kühl-/ und/oder Schmiermitteln versorgt werden. Wie bereits bei der Diskussion der Fig. 4 ausgeführt, wird der Übergang von der Steuerstange 270 auf das Kraftübertragungsteil 510 auf das Werkzeug 530 mittels einer Dichtung abgedichtet.

Das Werkzeug 530 enthält ferner eine Gabel 570 und einen Stellkopf 560. Ein vorgespanntes Federpaket 580 schiebt die Gabel 570 in Richtung der Spindelwelle 240. Anstelle einer Feder oder eines Federpakets kann beispielsweise eine pneumatische Druckeinheit eingesetzt werden. Diese Position der Gabel 570 ist in der Fig. 5 durch das Bezugszeichen 537 veranschaulicht. In der Position 537 ist die Werkzeugschneide 540 des Werkzeugs 530 eingefahren. Der Stellkopf 560 kann durch Verbiegen eines inneren Werkzeugteils 550 mit Hilfe einer Translationsbewegung der Steuerstange 270 eingestellt werden. Für einen gröberen Bohrvorgang wird die Gabel 570 des Werkzeugs 530 mit einem Hub 538 von bis zu 5 mm gegen die Kraft des vorgespannten Federpakets 580 vom Schaft des Werkzeugteils 550 verschoben. Diese Verschiebung ist in der Fig. 5 durch das Bezugszeichen 538 symbolisiert. Das Verbiegen des inneren Werkzeugteils 550 führt zu einer radialen Verstellung der Werkzeugschneide des Werkzeugs 530 weg von der Rotationsachse. In diesem Zustand 538, d.h. mit ausgefahrener Werkzeugschneide 541 des Werkzeugs 530 werden gröbere Bohrvorgänge (Semi-Finish-Bohren) ausgeführt.

Zum Feinbohren oder zum Finish-Bohren wird die Steuerstange 270 um bis zu 5 mm zurückgezogen, d.h. in Richtung der B-Seite bewegt. Als dessen Folge verschiebt das Federpaket 580 die Gabel 570 in Richtung Spindelwelle 240 und die Verbiegung des inneren Werkzeugteils 550 wird rückgängig gemacht. Dadurch kehrt die Werkzugschneide 541 des Werkzeugs 530 in ihre Ausgangsposition 540 zurück.

Die Feder oder das Federpaket 580 des Werkzeugs 530 der Fig. 5 liefert die bei einem automatisch spannbaren Werkzeug aufgrund der losen Kopplung der Steuerstange 270 an das Kraftübertragungsteil 510 fehlende Zugkraft der Steuerstange. Das in der Fig. 5 gezeigte extern ansteuerbare und automatisch spannbare Werkzeug 530 arbeitet im Wesentlichen ohne Spiel. Mit dem Werkzeug 530 wird eine Wiederholgenauigkeit im Mikrometerbereich erreicht.

Zwischen dem Schaft oder dem Aufnahmeteil 535 des Werkzeugs 530 und der Gabel 570 ist eine Verschiebung 536 von wiederum etwa 5 mm zur Kompensation des Werkzeugverschleißes vorgesehen.

Die Anordnung 600 der Fig. 6 zeigt wiederum die Werkzeugseite der Motorspindel 210 der Fig. 2. Auf die Spindelwelle 240 der Motorspindel 210 ist in dem Beispiel der Fig. 6 ein einstellbares Werkzeug 630 aus dem Stand der Technik für einen Feinbearbeitungsprozess genauer für einen Feinbohrprozess aufgespannt. In dem Beispiel der Fig. 6 wird das einstellbare Werkzeug 630 durch eine Translationsbewegung der Steuerstange 270 gesteuert. Ähnlich wie in der Diskussion der Fig. 5 ausgeführt, stehen das Ende der Steuerstange 270 und das Anschlussteil oder Kraftübertragungsteil 610 des Werkzeugs 630 über eine lose mittels einer Feder vorgespannten Kopplung in Verbindung. Das Kraftübertragungsteil 610 des Werkzeugs 630 ist mit dem Bolzen 650 verbunden. Der Bolzen 650 ist dichtschiebend eingeläppt in dem Werkzeug 640 gelagert. Der Bolzen 650 weist an seinem vorderen Ende eine Hartmetallleiste 670 auf, die über eine Kugel 675 und den Stift 677 auf die Schneide 640 des Werkzeugs wirkt.

Durch Verschieben des Bolzens 650 mit Hilfe der Steuerstange 270 in axialer Richtung kann die Werkzeugschneide 640 des Werkzeugs 630 eingestellt oder gesteuert werden. Je weiter die Steuerstange 270 den Bolzen 650 über das Kraftübertragungsteil 610 in das Werkzeug 630 drückt, desto weiter wird die Werkzeugschneide 640 des Feinbearbeitungswerkzeugs 630 ausgefahren. Wird die Steuerstange 270 zurückgezogen, so drückt das Federpaket 655 den Bolzen 650 gegen den Schaft oder das Aufnahmeteil 635 des Werkzeugs 630. Wenn der Bolzen 650 gegen das Aufnahmeteil 635 des Werkzeugs 630 verschoben wird, relaxiert die Verbiegung des Schneidplattenhalters 680, wodurch die Werkzeugschneide 640 in das Werkzeug 630 einklappt, so dass das Werkzeug 630 aus einem Bohrloch ausgefahren werden kann, ohne dass die Werkzeugschneide 640 die Wandung des Bohrloches berührt. Mit den Befestigungselementen 660, die in dem in der Fig. 6 dargestellten Werkzeug 630 als Schrauben ausgeführt sind, wird der Schneidplattenhalter 680 an dem Werkzeug 630 befestigt. Bei dem in der Fig. 6 dargestellten Werkzeug 630 kann die Werkzeugschneide 640 im Bereich von 0,4 mm bis 0,7 mm im Durchmesser verstellt werden. Die Wiederholgenauigkeit der Werkzeugschneiden 640 des Werkzeugs 630 liegt im Bereich von etwa 10 µm im Durchmesser.

Das Kraftübertragungsteil 610 weist einen Kanal 615 zum Durchleiten eines Fluids auf. Über die Öffnungen 690 kann das Werkzeug 630 durch die Bohrung 280 der Steuerstange 270 und den Kanal 615 des Kraftübertragungsteils 610 durch Bereitstellen einer entsprechenden Menge eines Fluids gekühlt und/oder geschmiert werden.

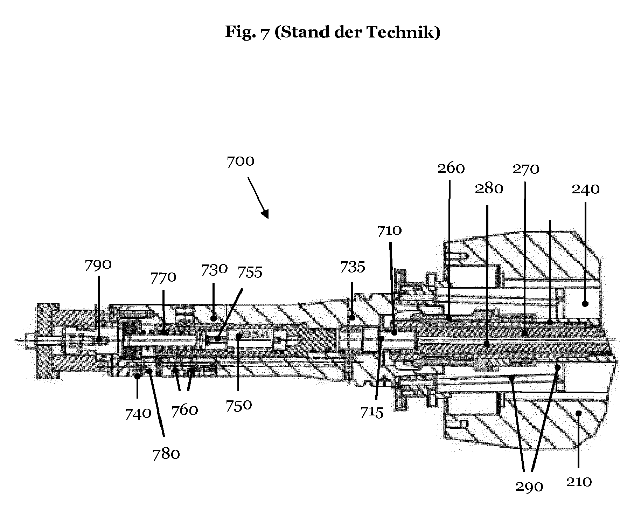

Schließlich zeigt die Anordnung 700 der Fig. 7 die A-Seite der Motorspindel 210 auf deren Spindelwelle 240 ein zweites Feinbearbeitungswerkzeug 730 aus dem Stand der Technik aufgespannt ist. Das in der Fig. 7 beispielhaft dargestellte einstellbare Werkzeug 730 ist ein Bohrwerkzeug zum Finish-Bohren. Das Kraftübertragungsteil 710 weist einen Kanal 715 auf, der mit der Bohrung 280 der Steuerstange 270 in Verbindung steht. Der Kanal 715 führt im Werkzeug 730 bis zu der Werkzeugschneide 740. Durch Einbringen eines Fluids unter einem entsprechenden Druck in die Drehdurchführung 330 wird die Werkzeugschneide 740 des Werkzeugs in definierter Weise ausgefahren. Beim Entfernen des Drucks klappt die Schneide 740 des Werkzeuges 730 soweit in das Werkzeug 730 zurück, dass die Schneide 740 beim Herausfahren aus dem Werkstück die Wandung des Bohrloches nicht beschädigt. Mit den Befestigungselementen 760, die in dem Beispiel der Fig. 7 ebenfalls in Form von Schrauben ausgeführt sind, wird der Schneidplattenhalter 780 an dem Werkzeug 730 befestigt. Ähnlich wie oben im Kontext des Werkzeugs 630 der Fig. 6 erläutert, erfolgt das Ausfahren bzw. Einstellen der Werkzeugschneide 740 des Fluid- oder Medien-gesteuerten Werkzeugs 730 der Fig. 7 durch Materialverbiegung des Schneidplattenhalters 780.

Mit Hilfe der Planetengewindespindel 755, der Mutter 750 und des Zapfens 790 wird das Werkzeug 730 gegen den Widerstand des Federpakets 770 voreingestellt. Zum Kompensieren des Verschleißes der Werkzeugschneide 740 des Werkzeugs 730 wird dieses mittels des Zapfens 790 und der Planetengewindespindel 750 nachgestellt. Die Wiederholgenauigkeit der Durchmessereinstellung des Medien-gesteuerten Werkzeugs 730 liegt im Mikrometerbereich.

Die in der vorliegenden Beschreibung erläuterte Vorrichtung ermöglicht sowohl ein automatisches Spannen wie auch ein automatisches Einstellen bzw. Verstellen einstellbarer Werkzeuge. Dabei ist es unerheblich, ob die einstellbaren Werkzeuge für eine mechanische (d.h. durch eine Translationsbewegung der Steuerstange) oder für eine Fluid-gesteuerte (d.h. durch Bereitstellen eines Fluids unter einem entsprechenden Druck) Einstellung ausgelegt sind.

Im Folgenden werden weitere Beispiele beschrieben, um das Verständnis der Erfindung zu erleichtern.
1. Motorspindel für eine Werkzeugmaschine aufweisend:
   a. ein Werkzeugspannsystem, das ausgebildet ist, ein einstellbares Werkzeug automatisch zu spannen und zu entspannen;
   b. eine innerhalb des Werkzeugspannsystems angeordnete Steuerstange; und
   c. eine an einer B-Seite der Motorspindel angeordnete Einstelleinheit, die ausgebildet ist das einstellbare Werkzeug mittels der Steuerstange einzustellen.
2. Motorspindel nach Beispiel 1, wobei die Steuerstange eine Bohrung in axialer Richtung aufweist, um zumindest ein Fluid durch die Steuerstange zu leiten.
3. Motorspindel nach Beispiel 2, wobei das zumindest eine Fluid ein Kühlmittel, ein Gas oder ein Gasgemisch, insbesondere Luft und/oder ein Öl umfasst.
4. Motorspindel nach einem der vorhergehenden Beispiele, wobei die Einstelleinheit zumindest einen Elektromotor und zumindest ein Schraubgetriebe umfasst.
5. Motorspindel nach Beispiel 4, wobei das zumindest eine Schraubgetriebe ein Umlaufrädergetriebe umfasst.
6. Motorspindel nach Beispiel 4, wobei der zumindest eine Elektromotor zumindest einen Servomotor umfasst und wobei ferner die Einstelleinheit eine Kupplung umfasst, um das zumindest eine Schraubgetriebe an Servomotor zu koppeln.
7. Motorspindel nach einem der Beispiele 4 bis 6, wobei der zumindest eine Elektromotor mittels des zumindest einen Schraubgetriebes die Steuerstange in axialer Richtung bewegt, um das einstellbare Werkzeug einzustellen.
8. Motorspindel nach einem der vorhergehenden Beispiele, wobei die Einstelleinheit die Steuerstange nach elektronischer Abfrage der axialen Position der Steuerstange das Werkzeug-seitige Ende der Steuerstange mit einer mittleren Abweichung von ≤ ± 100 µm, bevorzugt ≤ ± 50 µm, bevorzugter ≤ ± 20 µm und am meisten bevorzugt ≤ ± 10 µm von einer vorgegebenen Sollposition bewegt.
9. Motorspindel nach einem der vorhergehenden Beispiele, wobei die Einstelleinheit eine Kühlmitteleinheit umfasst.
10. Motorspindel nach Beispiel 9, wobei die Kühlmitteleinheit eine Drehdurchführung umfasst.
11. Motorspindel nach Beispiel 9 oder 10, wobei die Kühlmitteleinheit mittels des zumindest einen durch die Steuerstange geleiteten Fluids das einstellbare Werkzeug einstellt.
12. Motorspindel nach Beispiel 11, wobei das zumindest eine Fluid das einstellbare Werkzeug kühlt und/oder schmiert.
13. Motorspindel nach einem der Beispiele 2 bis 11, wobei eine axiale Bewegung der Steuerstange das einstellbare Werkzeug einstellt und das zumindest eine Fluid das einstellbare Werkzeug kühlt und/oder schmiert.
14. Verfahren zum Einstellen eines einstellbaren Werkszeugs, das lösbar mit einer Motorspindel einer Werkzeugmaschine verbunden ist, wobei die Motorspindel ein automatisches Werkzeugspannsystem aufweist und das Werkzeugspannsystem eine innerhalb des automatischen Werkzeugspannsystems angeordnete Steuerstange umfasst, das Verfahren die Schritte aufweisend:
   a. Spannen und Entspannen des einstellbaren Werkzeugs durch das automatische Werkzeugspannsystem; und
   b. Einstellen des einstellbaren Werkzeugs durch eine an einer B-Seite der Motorspindel angeordnete Einstelleinheit mittels der Steuerstange.
15. Verfahren nach Beispiel 14, wobei das Einstellen des einstellbaren Werkzeugs das Bewegen der Steuerstange in axialer Richtung umfasst.
16. Verfahren nach Beispiel 15, wobei das Bewegen der Steuerstange in axialer Richtung das Umsetzen einer Rotationsbewegung einer Welle eines Elektromotors in eine Translationsbewegung der Steuerstange durch ein Schraubgetriebe, insbesondere ein Umlaufrädergetriebe umfasst.
17. Verfahren nach Beispiel 14, wobei das Einstellen des einstellbaren Werkzeugs das Leiten eines Fluids durch eine in axialer Richtung der Steuerstange vorhandene Bohrung umfasst.
18. Verfahren nach Beispiel 14, wobei das Einstellen des einstellbaren Werkzeugs das Bewegen der Steuerstange in axialer Richtung umfasst und das Kühlen und/oder Schmieren des einstellbaren Werkzeugs durch das Leiten eines Fluids durch eine in axialer Richtung der Steuerstange vorhandene Bohrung umfasst.
19. Einstellbares Werkzeug aufweisend:
   a. ein Aufnahmeteil, das ausgebildet ist mit einem automatischen Werkzeugspannsystem in lösbaren Eingriff zu gelangen; und
   b. ein Kraftübertragungsteil, das ausgebildet ist mit einer im automatischen Werkzeugspannsystem angeordneten Steuerstange in lösbaren Eingriff zu gelangen, um das einstellbare Werkzeug einzustellen.
20. Einstellbares Werkzeug nach Beispiel 19, wobei das Kraftübertragungsteil, ferner ausgebildet ist ein Fluid aufzunehmen, das mittels einer axialen Bohrung der Steuerstange dem einstellbaren Werkzeug bereitgestellt wird.
21. Einstellbares Werkzeug nach Beispiel 19 oder 20, ferner aufweisend zumindest eine Feder, die ausgebildet ist einer auf das Kraftübertragungsteil ausgeübten Kraft entgegenzuwirken.

## Patentansprüche

1. Motorspindel für eine Werkzeugmaschine aufweisend:
a. ein Werkzeugspannsystem, das ausgebildet ist, ein einstellbares Werkzeug automatisch zu spannen und zu entspannen;
b. eine innerhalb des Werkzeugspannsystems angeordnete Steuerstange; und
c. eine an einer B-Seite der Motorspindel angeordnete Einstelleinheit, die ausgebildet ist das einstellbare Werkzeug mittels der Steuerstange einzustellen.

2. Motorspindel nach Anspruch 1, wobei die Steuerstange eine Bohrung in axialer Richtung aufweist, um zumindest ein Fluid durch die Steuerstange zu leiten.

3. Motorspindel nach Anspruch 1 oder 2, wobei die Einstelleinheit zumindest einen Elektromotor und zumindest ein Schraubgetriebe umfasst.

4. Motorspindel nach Anspruch 3, wobei das zumindest eine Schraubgetriebe ein Umlaufrädergetriebe umfasst.

5. Motorspindel nach Anspruch 3, wobei der zumindest eine Elektromotor zumindest einen Servomotor umfasst und wobei ferner die Einstelleinheit eine Kupplung umfasst, um das zumindest eine Schraubgetriebe an Servomotor zu koppeln.

6. Motorspindel nach einem der Ansprüche 3 bis 5, wobei der zumindest eine Elektromotor mittels des zumindest einen Schraubgetriebes die Steuerstange in axialer Richtung bewegt, um das einstellbare Werkzeug einzustellen.

7. Motorspindel nach einem der vorhergehenden Ansprüche, wobei die Einstelleinheit die Steuerstange nach elektronischer Abfrage der axialen Position der Steuerstange das Werkzeug-seitige Ende der Steuerstange mit einer mittleren Abweichung von ≤ ± 100 µm, bevorzugt ≤ ± 50 µm, bevorzugter ≤ ± 20 µm und am meisten bevorzugt ≤ ± 10 µm von einer vorgegebenen Sollposition bewegt.

8. Motorspindel nach einem der vorhergehenden Ansprüche, wobei die Einstelleinheit eine Kühlmitteleinheit umfasst.

9. Motorspindel nach Anspruch 8, wobei die Kühlmitteleinheit mittels des zumindest einen durch die Steuerstange geleiteten Fluids das einstellbare Werkzeug einstellt.

10. Motorspindel nach einem der Ansprüche 2 bis 9, wobei eine axiale Bewegung der Steuerstange das einstellbare Werkzeug einstellt und das zumindest eine Fluid das einstellbare Werkzeug kühlt und/oder schmiert.

11. Verfahren zum Einstellen eines einstellbaren Werkszeugs, das lösbar mit einer Motorspindel einer Werkzeugmaschine verbunden ist, wobei die Motorspindel ein automatisches Werkzeugspannsystem aufweist und das Werkzeugspannsystem eine innerhalb des automatischen Werkzeugspannsystems angeordnete Steuerstange umfasst, das Verfahren die Schritte aufweisend:
a. Spannen und Entspannen des einstellbaren Werkzeugs durch das automatische Werkzeugspannsystem; und
b. Einstellen des einstellbaren Werkzeugs durch eine an einer B-Seite der Motorspindel angeordnete Einstelleinheit mittels der Steuerstange.

12. Verfahren nach Anspruch 11, wobei das Einstellen des einstellbaren Werkzeugs das Bewegen der Steuerstange in axialer Richtung umfasst.

13. Verfahren nach Anspruch 12, wobei das Bewegen der Steuerstange in axialer Richtung das Umsetzen einer Rotationsbewegung einer Welle eines Elektromotors in eine Translationsbewegung der Steuerstange durch ein Schraubgetriebe, insbesondere ein Umlaufrädergetriebe umfasst.

14. Verfahren nach Anspruch 11, wobei das Einstellen des einstellbaren Werkzeugs das Leiten eines Fluids durch eine in axialer Richtung der Steuerstange vorhandene Bohrung umfasst.

15. Verfahren nach Anspruch 11, wobei das Einstellen des einstellbaren Werkzeugs das Bewegen der Steuerstange in axialer Richtung umfasst und das Kühlen und/oder Schmieren des einstellbaren Werkzeugs durch das Leiten eines Fluids durch eine in axialer Richtung der Steuerstange vorhandene Bohrung umfasst.
